# EUROPEAN PATENT SPECIFICATION

(11) **EP 3 851 738 B1**
(45) Date of publication and mention of the grant of the patent: **03.01.2024**
(21) Application number: 21152614.0
(22) Date of filing: 20.01.2021
(51) Int. Cl.: F21S 45/10, F21S 41/147, F21S 41/148, F21S 41/20, F21S 41/32, F21S 41/36, F21S 41/50, F21S 41/33

(54) **CLEAR LENS LIGHTING DEVICE FOR VEHICLES**
KLARLINSENBELEUCHTUNGSVORRICHTUNG FÜR FAHRZEUGE
DISPOSITIF D'ÉCLAIRAGE À LENTILLE CLAIRE POUR VÉHICULES

(30) Priority: 20.01.2020 IT 202000000979
(43) Date of publication of application: 21.07.2021
(73) Proprietor: Marelli Automotive Lighting Italy S.p.A. Con Socio Unico, 10078 Venaria Reale (TO) (IT)
(72) Inventor: FALESSI, Alessandro, 10078 VENARIA REALE (TO) (IT)
(74) Representative: Studio Torta S.p.A.

(56) References cited:
- EP-A1- 1 191 280
- EP-A1- 2 573 456
- EP-A1- 2 824 382
- EP-A1- 2 987 709
- DE-U1-202018 104 269
- GB-A- 2 005 003
- JP-A- 2004 265 697
- JP-A- 2018 067 502
- US-A1- 2019 041 024
- US-A1- 2019 271 457

## Description

### Cross-reference to related applications

This patent application claims priority from Italian patent application no. 102020000000979 filed on January 20, 2020.

### Technical field of the invention

The present invention relates to a clear lens lighting device for vehicles, in particular a headlamp for a vehicle, such as a motor vehicle or a motorcycle, wherein a cup-shaped housing or body contains a reflector which is operatively associated with a light source and is arranged, visible from the outside, in front of a lens or a cover for closing the cup-shaped housing or body, the lens or the cover being completely transparent.

### Prior art

As is known, a vehicle headlamp comprises a cup-shaped housing which houses at least one reflector operatively associated with a light source, and a transparent element or cover or lens arranged to close a front opening of the cup-shaped housing. An example of a vehicle headlamp of this type is described in EP3594564 by Honda Motor Company.

In this type of headlamp, the reflector (or a plurality of reflectors arranged side by side if the cup-shaped body or housing contains more than one light source, for example to provide different lighting such as low beam, high beam, etc.) is completely visible from the outside, through the transparent element or lens, generally devoid of optical functions, arranged to close the cup-shaped body. Moreover, both the cup-shaped body and the lens or transparent element that closes its front opening through which the entire inside of the cup-shaped body is visible, are generally made of synthetic plastic materials.

In this type of headlamps, which are increasingly used both for technical and aesthetic reasons, there is the problem of preventing internal parts of the headlamp, or the lens itself, from being damaged by the sun rays which, when the vehicle is parked on the road and in particular lighting conditions, can penetrate the inside of the cup-shaped body through the transparent element or cover or lens, hit the reflector (or one or more of the reflectors) and be reflected by it in an unpredictable and insistent manner against an inner part of the cup-shaped body and/or against points of the transparent element or lens, causing local "burning" thereof, which burning, as it is visible from the outside of the cup-shaped body, is extremely unsightly and can lead, in the most serious cases, to a reduction in the lighting efficiency of the headlamp.

The same problem can also occur in the lamps, when they are also provided with internal reflectors visible from the outside of the lamp through a clear lens (i.e. completely transparent and devoid of optical functions) of the same.

This problem has so far been solved by adopting materials which are not subject to damage by heating, for example glass lenses and metal coatings, which are however expensive, sometimes complex to implement and which increase the weight of the headlamp or lamp, contributing to increase the vehicle's fuel consumption.

US20190041024 does not solve this problem. In fact, it relates to an internal arrangement of a headlamp designed to prevent the occupants of a third-party vehicle from being dazzled when the headlamp is switched on during their crossing. In particular, according to this document, a screen that is not necessarily reflective (US20190041024 is totally silent on this detail) is equipped with diffusion portions turned towards a rear part of the reflector and surrounding respective through holes in the screen and above which holes (therefore above the screen) respective light sources carried by a substrate are arranged.

### Summary of the invention

The object of the present invention is to eliminate the drawbacks of the prior art in a simple, effective and inexpensive way, by providing a vehicle lighting device equipped with a clear lens and at least one internal reflector visible through the clear lens, which is not susceptible to damage due to reflected sunlight.

The present invention therefore relates to a lighting device for a vehicle, in particular a headlamp for a vehicle, equipped with a clear closing lens and at least one internal reflector visible from the outside through the clear lens and having the features set forth in the appended claims.

In particular, the lighting device according to the invention comprises a cup-shaped housing or body housing at least one reflector operatively associated with at least one light source, and a transparent element or lens, which closes a front opening of the cup-shaped housing or body and through which the at least one reflector is visible from outside the vehicle.

The at least one reflector is configured to deflect by reflection a light beam produced by the at least one light source through the transparent lens and along an optical axis of the lighting device which, in use, is oriented parallel to a direction of travel of the vehicle.

The device further comprises a shield which is placed at least partly facing the at least one reflector and substantially parallel to the optical axis.

The shield is delimited towards the reflector by a reflecting surface provided with projections uniformly distributed thereon, for example this reflecting surface is grooved or embossed.

The shield defines a front portion, facing towards the transparent lens, of an upper wall of a frame element, said upper wall being connected integrally in one piece with the at least one reflector, said front portion of the upper wall of the frame element being separated from a rear portion of the upper wall supporting a printed circuit board provided with said at least one light source, by a step, so that the light source is separated too from said front portion of the upper wall by said step and the light source is arranged below said shield.

The reflecting surface of the shield is preferably a flat, embossed or grooved surface.

Furthermore, the shield is made integral in one piece with the reflector, as a flat overhang protruding axially from the reflector in a direction substantially parallel to the optical axis.

Preferably, the shield is not only made integral in one piece with the reflector, but also forms an acute angle therewith.

Moreover, the shield has the shape of a flat plate which has a rear end, turned towards the reflector and connected integrally in one piece with the reflector, with which it forms the aforesaid acute angle. Said rear end being defined by said rear portion of said upper wall of said frame element. Said front end being defined by said front portion of said upper wall of said frame.

Moreover, a front end of the flat plate, turned towards the transparent lens, at least partly faces the reflector, but is separated from the rear end and the light source by a step.

The lighting device of the invention preferably consists of a vehicle front headlamp, which comprises said frame element arranged inside the cup-shaped housing or body.

The reflector defines a rear wall and a bottom wall of the frame element, the front portion of the upper wall of which being defined by said shield.

This upper wall of the frame element is connected integrally in one piece with the reflector.

In particular, said rear portion or end thereof, which is connected to the front portion by the step and which supports said printed circuit board equipped with the at least one light source, which has an emission direction substantially perpendicular to the printed circuit board.

The printed circuit board is arranged substantially horizontal and substantially parallel to the optical axis.

Preferably, the frame element is equipped with a plurality of reflectors arranged side by side and defining, all together, the rear and lower wall of the frame element.

The reflectors are separated from one another by respective ribs of the frame element which connect integrally in one piece respective lateral edges of the reflectors to the upper wall of the frame element.

The upper wall of the frame element further delimits a single shield oriented so that it faces all the reflectors with its reflecting surface.

This reflecting surface of the shield is provided with projections, which are uniformly distributed on the reflecting surface of the shield facing the reflector and are selected from the group consisting of: micro-prisms, embossing, knurling, rifling, holograms.

Lastly, the invention also relates to a vehicle comprising a lighting device, headlamp or lamp, as described above.

### Brief Description of the Drawings

Further features and advantages of the present invention will become clearer from the following description of a non-limiting embodiment thereof, given purely by way of example with reference to the accompanying drawings, wherein:
- Figure 1 is a schematic front three-quarter axonometric view from above of a vehicle headlamp without a front lens and made according to the teachings of the present invention;
- Figure 2 is a schematic, enlarged-scale, front three-quarter axonometric view from above of a component of the vehicle headlamp in Figure 1, made according to the invention;
- Figure 3 is a schematic sectional side elevational view along a plane III-III of the vehicle headlamp in Figure 1; and
- Figure 4 is a schematic front three-quarter axonometric view from below of the component in Figure 2 and schematically illustrates the operation of the invention.

### Detailed description

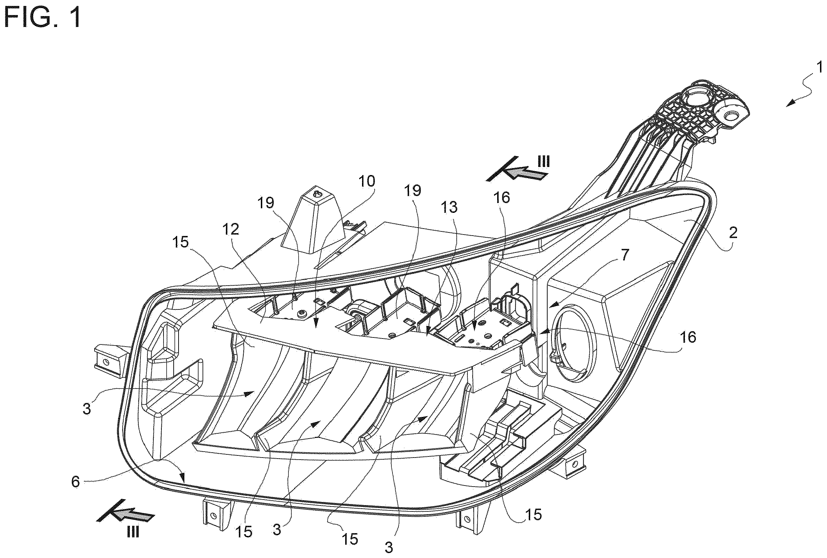

With reference to Figure 1, the reference numeral 1 indicates, as a whole, a lighting device for a vehicle, in the non-limiting embodiment illustrated herein consisting of a vehicle front headlamp.

Here and hereinafter, in the following non-limiting description, reference will be made to the vehicle headlamp of Figure 1 without thereby taking away the generality of the invention, which is applicable to any lighting device for vehicles, headlamp or lamp, provided with a clear outer lens.

The headlamp 1 comprises a cup-shaped housing or body 2 housing at least one reflector 3.

The reflector 3 is operatively associated with at least one light source 4, which preferably consists of a LED or a battery of LEDs, possibly of different colours.

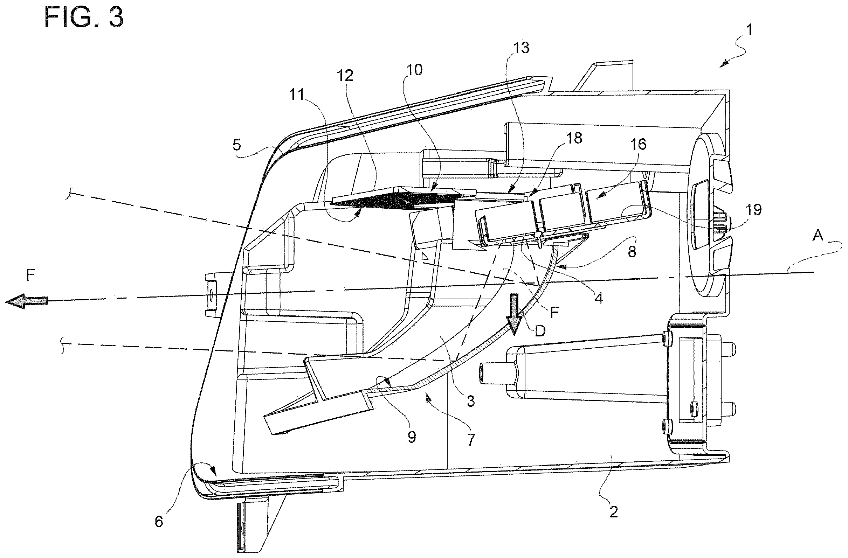

The headlamp 1 further comprises a transparent element or lens (or cover) 5 (Figure 3), which closes a front opening 6 of the cup-shaped housing or body 2.

The front opening 6 is configured so that, through the same and the transparent lens 5 (a clear lens, i.e. devoid of optical functions), the at least one reflector 3 is visible from outside the vehicle, i.e. from outside the cup-shaped body or housing 2.

The at least one reflector 3 is configured to deflect by reflection a light beam F produced by the at least one light source 4 and through the transparent lens 5 along an optical axis A of the lighting device 1 (Figure 3) which, in use, is oriented parallel to a direction of travel of the vehicle (known and not shown), which is generally substantially horizontal.

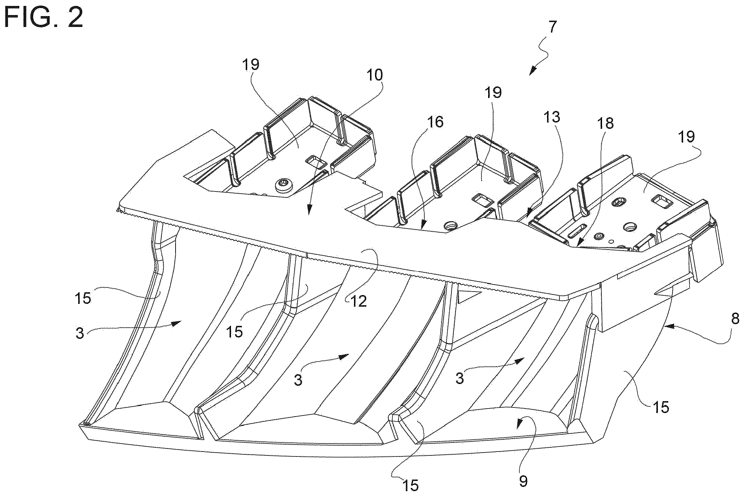

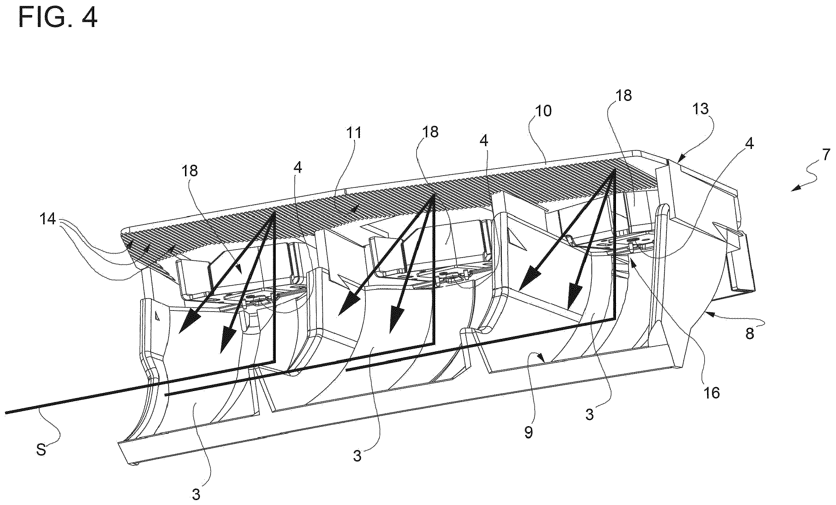

In the preferred non-limiting embodiment shown in Figures 1 to 4, the lighting device 1 consists of a vehicle front headlamp, which comprises a frame element 7, which is illustrated in greater detail and separated from the housing 2 in Figures 2 and 4.

The frame element 7 is arranged inside the cup-shaped housing or body 2 and, according to a preferred aspect of the invention, the at least one reflector 3 defines at least part of a rear wall 8 and at least part of a lower wall 9 of the frame element 7.

The lighting device 1 further comprises a shield 10 which is placed at least partly facing the at least one reflector 3 and placed substantially parallel to the optical axis A.

In particular, the shield 10 lies in a plane parallel to a plane in which the optical axis A is contained and substantially parallel to the lower wall 9 and the horizontal plane.

The shield 10 is delimited towards the reflector 3 by a surface 11 (Figures 3 and 4), which according to the invention is reflective and at the same time provided with projections 14 (Figure 4) uniformly distributed thereon.

For example, the reflecting surface 11 is grooved or embossed.

The shield 10 defines a front portion 12, facing on the side of the transparent lens 5, of an upper wall 13 of the frame element 7. In other words, the shield 10 is solely formed by the front portion 12 of the upper wall 13 of the frame element 7, and for this reason the shield 10 does not face a rear portion of the reflector 3 immediately adjacent to the rear wall 8, neither the portion of the reflector 3 constituting or forming part of the rear wall 8.

Basically, the shield 10 only faces a front portion of the reflector 3 immediately adjacent to, or forming part of, the lower wall 9.

This upper wall 13 is connected integrally in one piece with the at least one reflector 3.

In the non-limiting example shown, the frame element 7 is equipped with a plurality of reflectors 3 arranged side by side and defining, all together, the rear wall 8 and the lower wall 9 of the same frame element 7.

The reflectors 3, for example three in number as in the non-limiting example shown, are separated from one another by respective ribs 15 of the frame element 7, which connect integrally in one piece respective opposite lateral edges of the reflectors 3 to the upper wall 13 of the frame element 7.

In this way, each reflector 3 can perform a specific optical function, for example, low beam, high beam or direction indicator lamp as regards the rightmost reflector 3 in Figures 1, 2 and 4, which, in use, is arranged on the outer side of the vehicle or "outboard".

In this embodiment, the upper wall 13 of the frame element 7 delimits a single shield 10 oriented so that it faces all the reflectors 3 with its reflecting surface 11.

The reflecting surface 9 of the shield 10 is preferably a flat, embossed or grooved surface.

The shield 10 is made integral in one piece with the at least one reflector 3, in the example shown with all three reflectors 3 side by side, as a flat overhang protruding axially from the reflector(s) 3 in a direction substantially parallel to the optical axis A. In other words, the shield 10 protrudes at the front in a cantilevered manner (i.e. cantilevered towards the lens 5) from the reflector 3, and in particular in a cantilevered manner with respect to a front edge of the reflector 3 delimiting the lower wall 9 at the front and arranged immediately adjacent to the lens 5.

The shield 10 is therefore preferably made integral in one piece with the at least one reflector 3/all the reflectors 3 and forms with it/each of them an acute angle, i.e. less than 90°.

The shield 10 preferably has the shape of a flat plate.

This flat plate defining the shield 10 has a rear end defined by the rear portion 16 thereof.

The rear portion or end 16 is turned towards each reflector 3 and is connected integrally in one piece with the reflector(s) 3, with which it forms an acute angle.

The flat plate defining the shield 10 also has a front end defined by the front portion 12 of the upper wall 13.

The front end or portion 12 is turned towards the transparent lens 5 and faces towards the reflector(s) 3, in such a manner that an ideal vertical line passing through it does not intercept the reflectors 3, but is arranged in front of them, towards the lens 5. According to a possible embodiment, not shown, however, the front end or portion 12 could not protrude at the front in a cantilevered manner with respect to the reflectors 3, in which case the aforesaid ideal vertical line passing through the end 12 intercepts the reflectors 3.

According to another aspect of the invention, the rear portion of the upper wall 13 defined by the rear end 16 is connected to the front portion or end 12 by a step 18 and supports a printed circuit board 19, three printed circuit boards 19 in the example shown, one for each reflector 3.

Each printed circuit board 19 is provided with said at least one light source 4, which (Figure 3) has an emission direction D substantially perpendicular to the respective printed circuit board 19.

In this way, according to the invention, the shield 10 is separated from the light source 4 by the step 18, which is configured so that the light source 4 is arranged below the shield 10.

Each printed circuit board 19 can be arranged substantially horizontal and substantially parallel to the optical axis A or, as in the preferred embodiment shown, is arranged inclined with respect to the optical axis A, so as to form with the shield 10, at the step 18, an acute angle pointing downwards and towards the lens 5.

The step 18 allows the light source 4 and the printed circuit board 19 associated therewith to be arranged lower than the shield 10, i.e. closer to the lower wall 9 than the shield 10.

The projections 14 uniformly distributed on the reflecting surface 11 of the shield 10 facing the at least one reflector 3/the reflectors 3 are selected from the group consisting of: micro-prisms, embossing, knurling, rifling, holograms and the like, i.e., micrometric projections capable of dispersing the light incident on the reflecting surface 11, so as to prevent it from being reflected towards a unique and defined point.

Lastly, it should be noted that the invention also extends to a vehicle, for example a motor vehicle or a motorcycle, comprising a lighting device 1, headlamp or lamp, made according to what has been described so far.

With reference to Figure 4, any sun rays S which, when the vehicle is parked outdoors, can enter the cup-shaped body or housing 2 through the clear lens 5 and the corresponding opening 6, hitting the reflectors 3, would normally be reflected backwards towards the opening 6 and/or towards the side walls of the cup-shaped body or housing 2.

According to the invention, however, the rays S, before reaching these targets, are intercepted by the shield 10, also and above all thanks to the presence of the step 18. This prevents the creation of burns on the lens 5 and on the exposed parts of the cup-shaped body or housing 2 visible from the outside.

At the same time, the shield 10, although it is made by moulding a synthetic plastic material, just like the lens 5, the cup-shaped body 2 and the whole frame element 7, does not get damaged since the reflected sun rays incident thereon, in turn, are reflected outside by the reflecting surface 11, which disperses them in different directions thanks to the projections 14.

Likewise, during normal use, when each light source 4 is activated and generates a light beam F which is then reflected outwards through the clear lens 5 by each reflector 3, the projections 14 prevent any anomalous light rays generated by the source 4 from creating so-called "parasitic rays", thus always ensuring maximum lighting efficiency of the lighting device 1.

Therefore, all the objects of the invention are achieved.

## Claims

1. A lighting device (1) for a vehicle, in particular a headlamp for a vehicle, comprising a cup-shaped housing or body (2) housing at least one reflector (3), operationally associated with at least one light source (4), and a transparent lens or element (5), which closes a front opening (6) of the cup-shaped housing or body and through which the at least one reflector (3) is visible from the outside of the vehicle, the at least one reflector being configured to deflect by reflection a light beam (F) produced by the at least one light source through the transparent lens and along an optical axis (A) of the lighting device which, in use, is oriented parallel to a direction of travel of the vehicle, wherein it further comprises a shield (10) which is placed at least partly facing the at least one reflector (3) and substantially parallel to the optical axis (A), the shield (10) being delimited towards the reflector (3) by a reflecting surface (11) having projections (14) uniformly distributed thereon, e.g. grooved or embossed, wherein the shield (10) defines a front portion (12), facing towards the transparent lens (5), of an upper wall (13) of a frame element (7), said upper wall (13) being connected integrally in one piece with the at least one reflector (3), said front portion (12) of the upper wall (13) of the frame element (7) being separated from a rear portion (16) of the upper wall (13) supporting a printed circuit board (19) provided with said at least one light source (4), by a step (18), so that the light source (4) is separated too from said front portion (12) of the upper wall (13) by said step (18) and the light source (4) is arranged below said shield (10) .

2. The lighting device according to claim 1, **characterized in that** said reflecting surface (11) of the shield (10) is a flat, embossed or grooved surface.

3. The lighting device according to claim 1 or 2, **characterized in that** the shield (10) is made integral in one piece with said at least one reflector (3) as a flat overhang protruding axially from the reflector (3) in a direction substantially parallel to the optical axis (A).

4. The lighting device according to one of the previous claims, **characterized in that** the shield (10) is made integral in one piece with said at least one reflector (3) and forms with it an acute angle.

5. The lighting device according to anyone of the previous claims, **characterized in that** the shield (10) has the shape of a flat plate which has: a rear end facing on the side of the reflector (3) and connected integrally with the reflector, with which it forms an acute angle, said rear end being defined by said rear portion (16) of said upper wall (13) of said frame element (7); and a front end facing on the side of the transparent lens (5) and facing towards the reflector (3), said front end being defined by said front portion (12) of said upper wall (13) of said frame (7).

6. The lighting device according to anyone of the previous claims, **characterized in that** it consists of a front headlamp (1) of a vehicle, which comprises said frame element (7) placed inside the cup-shaped housing or body (2); said at least one reflector (3) defining a rear wall (8) and a bottom wall (9) of the frame element (7), the front portion (12) of the upper wall (13) of which being defined by said shield (10); said upper wall (13) of the frame element (7) being connected integrally with the reflector (3) via said rear portion or end (16) thereof which is connected to the front portion (12) by said step (18) and which supports said printed circuit board (19) equipped with said at least one light source (4), which has an emission direction (D) substantially perpendicular to the printed circuit board (19) .

7. The lighting device according to claim 6, **characterized in that** said frame element (7) is equipped with a plurality of reflectors (3) arranged side by side and defining, all together, the rear and lower wall of the frame element, said reflectors being separated from one another by respective ribs (15) of the frame element which connect integrally in one piece respective lateral edges of the reflectors (3) to said upper wall (13) of the frame element; the upper wall of the frame element delimiting a single shield (10) oriented so that it faces all the reflectors (3) with said reflecting surface (11) of the same.

8. The lighting device according to one of the above claims, **characterized in that** the projections (14) uniformly distributed on the reflecting surface (11) of the shield (10) facing said at least one reflector (3) are selected from the group consisting of: micro-prisms, embossing, knurling, rifling, holograms.

9. **A** vehicle comprising a lighting device (1), headlamp or lamp, according to one of the above claims.

## Patentansprüche

1. Beleuchtungsvorrichtung (1) für ein Fahrzeug, insbesondere ein Frontscheinwerfer für ein Fahrzeug, umfassend ein napfförmiges Gehäuse oder einen napfförmigen Körper (2), in dem mindestens ein Reflektor (3) untergebracht ist, der wirksam mindestens einer Lichtquelle (4) zugeordnet ist, und eine transparente Linse oder ein transparentes Element (5), das eine vordere Öffnung (6) des napfförmigen Gehäuses oder Körpers abschließt und durch das der mindestens eine Reflektor (3) von außerhalb des Fahrzeugs sichtbar ist, wobei der mindestens eine Reflektor dazu konfiguriert ist, durch Reflexion einen Lichtstrahl (F), der von der mindestens einen Lichtquelle erzeugt wird, durch die transparente Linse und entlang einer optischen Achse (A) der Beleuchtungsvorrichtung abzulenken, die in der Verwendung parallel zu einer Fortbewegungsrichtung des Fahrzeugs ausgerichtet ist, wobei sie ferner einen Schild (10) umfasst, der mindestens teilweise zu dem mindestens einen Reflektor (3) weisend und im Wesentlichen parallel zur optischen Achse (A) ausgerichtet ist, wobei der Schild (10) durch eine reflektierende Oberfläche (11), die Fortsätze (14) hat, die auf dieser gleichmäßig verteilt, z. B. gerillt oder geprägt, sind, zu dem Reflektor (3) hin begrenzt ist, wobei der Schild (10) einen vorderen Teil (12), der zu der transparenten Linse (5) hin weist, einer oberen Wand (13) eines Rahmenelements (7) definiert, wobei die obere Wand (13) mit dem mindestens einen Reflektor (3) einteilig in einem Stück verbunden ist, wobei der vordere Teil (12) der oberen Wand (13) des Rahmenelements (7) von einem hinteren Teil (16) der oberen Wand (13), die eine Leiterplatte (19) trägt, die mit der mindestens einen Lichtquelle (4) ausgestattet ist, durch eine Stufe (18) getrennt ist, sodass die Lichtquelle (4) auch von dem vorderen Teil (12) der oberen Wand (13) durch die Stufe (18) getrennt ist und die Lichtquelle (4) unterhalb des Schilds (10) angeordnet ist.

2. Beleuchtungsvorrichtung gemäß Anspruch 1, **dadurch gekennzeichnet, dass** die reflektierende Oberfläche (11) des Schilds (10) eine flache, geprägte oder gerillte Oberfläche ist.

3. Beleuchtungsvorrichtung gemäß Anspruch 1 oder 2,
**dadurch gekennzeichnet, dass** der Schild (10) einteilig in einem Stück mit dem mindestens einen Reflektor (3) als ein flacher Überhang ausgebildet ist, der axial von dem Reflektor (3) in einer Richtung vorsteht, die im Wesentlichen parallel zur optischen Achse (A) ist.

4. Beleuchtungsvorrichtung gemäß einem der vorhergehenden Ansprüche, **dadurch gekennzeichnet, dass** der Schild (10) einteilig in einem Stück mit dem mindestens einen Reflektor (3) ausgebildet ist und mit diesem einen spitzen Winkel einschließt.

5. Beleuchtungsvorrichtung gemäß einem der vorhergehenden Ansprüche, **dadurch gekennzeichnet, dass** der Schild (10) die Form einer flachen Platte hat, die aufweist: ein hinteres Ende, das zur Seite des Reflektors (3) hin weist und einstückig mit dem Reflektor verbunden ist, mit dem er einen spitzen Winkel einschließt, wobei das hintere Ende durch den hinteren Teil (16) der oberen Wand (13) des Rahmenelements (7) definiert wird; und ein vorderes Ende, das auf die Seite der transparenten Linse (5) hin weist und zum Reflektor (3) hin weist, wobei das vordere Ende durch den vorderen Teil (12) der oberen Wand (13) des Rahmens (7) definiert wird.

6. Beleuchtungsvorrichtung gemäß einem der vorhergehenden Ansprüche, **dadurch gekennzeichnet, dass** sie aus einem Frontscheinwerfer (1) eines Fahrzeugs besteht, der das Rahmenelement (7) umfasst, das in dem napfförmigen Gehäuse oder Körper (2) angeordnet ist; wobei der mindestens eine Reflektor (3) eine Rückwand (8) und eine untere Wand (9) des Rahmenelements (7) definiert, dessen vorderer Teil (12) der oberen Wand (13) durch den Schild (10) definiert wird; wobei die obere Wand (13) des Rahmenelements (7) einstückig mit dem Reflektor (3) über dessen hinteren Teil oder dessen hinteres Ende (16) verbunden ist, der bzw. das über die Stufe (18) mit dem vorderen Teil (12) verbunden ist und der bzw. das die Leiterplatte (19) trägt, die mit der mindestens einen Lichtquelle (4) ausgestattet ist, die eine Abstrahlrichtung (D) hat, die im Wesentlichen senkrecht zur Leiterplatte (19) ist.

7. Beleuchtungsvorrichtung gemäß Anspruch 6, **dadurch gekennzeichnet, dass** das Rahmenelement (7) mit mehreren Reflektoren (3) ausgestattet ist, die nebeneinander angeordnet sind und alle zusammen die Rückwand und die untere Wand des Rahmenelements definieren, wobei die Reflektoren durch entsprechende Rippen (15) des Rahmenelements voneinander getrennt sind, die entsprechende seitliche Ränder der Reflektoren (3) einteilig in einem Stück mit der oberen Wand (13) des Rahmenelements verbinden; wobei die obere Wand des Rahmenelements einen einzigen Schild (10) begrenzt, der so ausgerichtet ist, dass er mit dessen reflektierender Oberfläche (11) zu allen Reflektoren (3) hin weist.

8. Beleuchtungsvorrichtung gemäß einem der vorhergehenden Ansprüche, **dadurch gekennzeichnet, dass** die Fortsätze (14), die gleichmäßig auf der reflektierenden Oberfläche (11) des Schilds (10) verteilt sind, die zu dem mindestens einen Reflektor (3) hin weist, aus der Gruppe ausgewählt sind, die aus Mikroprismen, Prägungen, Rändelungen, Riffelungen, Hologrammen besteht.

9. Fahrzeug, umfassend eine Beleuchtungsvorrichtung (1), einen Frontscheinwerfer oder eine Leuchte gemäß einem der vorhergehenden Ansprüche.

## Revendications

1. Dispositif d'éclairage (1) pour un véhicule, en particulier un projecteur pour un véhicule, comprenant un boîtier ou corps cupuliforme (2) logeant au moins un réflecteur (3), associé de manière fonctionnelle à au moins une source de lumière (4), et une lentille transparente ou un élément transparent (5), qui ferme une ouverture avant (6) du boîtier ou corps cupuliforme ou à travers lequel ou laquelle l'au moins un réflecteur (3) est visible de l'extérieur du véhicule, l'au moins un réflecteur étant configuré pour dévier par réflexion un faisceau lumineux (F) produit par l'au moins une source de lumière à travers la lentille transparente et le long d'un axe optique (A) du dispositif d'éclairage qui, pendant l'utilisation, est orienté parallèlement à une direction de déplacement du véhicule, dans lequel celui-ci comprend en outre un écran (10) qui est placé au moins en partie en face de l'au moins un réflecteur (3) et sensiblement parallèle à l'axe optique (A), l'écran (10) étant délimité vers le réflecteur (3) par une surface réfléchissante (11) ayant des saillies (14) réparties uniformément sur celle-ci, rainurées ou gaufrées par exemple, dans lequel l'écran (10) définit une partie avant (12), orientée vers la lentille transparente (5), d'une paroi supérieure (13) d'un élément de cadre (7), ladite paroi supérieure (13) étant reliée d'un seul tenant à l'au moins un réflecteur (3), ladite partie avant (12) de la paroi supérieure (13) de l'élément de cadre (7) étant séparée d'une partie arrière (16) de la paroi supérieure (13) supportant une carte de circuit imprimé (19) dotée de ladite au moins une source de lumière (4), par un palier (18), de sorte que la source de lumière (4) soit également séparée de ladite partie avant (12) de la paroi supérieure (13) par ledit palier (18) et la source de lumière (4) soit agencée au-dessous dudit écran (10).

2. Dispositif d'éclairage selon la revendication 1, **caractérisé en ce que** ladite surface réfléchissante (11) de l'écran (10) est une surface plane, gaufrée ou rainurée.

3. Dispositif d'éclairage selon la revendication 1 ou 2, **caractérisé en ce que** l'écran (10) est réalisé d'un seul tenant avec ledit au moins un réflecteur (3) sous la forme d'un porte-à-faux plat faisant saillie axialement à partir du réflecteur (3) dans une direction sensiblement parallèle à l'axe optique (A).

4. Dispositif d'éclairage selon l'une des revendications précédentes, **caractérisé en ce que** l'écran (10) est réalisé d'un seul tenant avec ledit au moins un réflecteur (3) et forme un angle aigu avec celui-ci.

5. Dispositif d'éclairage selon l'une quelconque des revendications précédentes, caractérisé en ce l'écran (10) a la forme d'une plaque plate qui présente : un côté arrière opposé au côté du réflecteur (3) et relié d'un seul tenant au réflecteur, avec lequel il forme un angle aigu, ledit côté arrière étant défini par ladite partie arrière (16) de ladite paroi supérieure (13) dudit élément de cadre (7) ; et un côté avant opposé au côté de la lentille transparente (5) et orienté vers le réflecteur (3), ledit côté avant étant défini par ladite partie avant (12) de ladite paroi supérieure (13) dudit cadre (7).

6. Dispositif d'éclairage selon l'une quelconque des revendications précédentes, **caractérisé en ce qu'**il est constitué d'un projecteur avant (1) d'un véhicule, qui comprend ledit élément de cadre (7) placé à l'intérieur du boîtier ou corps cupuliforme (2) ; ledit au moins un réflecteur (3) définissant une paroi arrière (8) et une paroi inférieure (9) de l'élément de cadre (7), la partie avant (12) de la paroi supérieure (13) de celui-ci étant définie par ledit écran (10) ; ladite paroi supérieure (13) de l'élément de cadre (7) étant reliée d'un seul tenant au réflecteur (3) via ladite partie ou extrémité arrière (16) de celle-ci qui est reliée à la partie avant (12) par ledit palier (18) et qui supporte ladite carte de circuit imprimé (19) équipée de ladite au moins une source de lumière (4), qui a une direction d'émission (D) sensiblement parallèle à la carte de circuit imprimé (19).

7. Dispositif d'éclairage selon la revendication 6, **caractérisé en ce que** ledit élément de cadre (7) est équipé d'une pluralité de réflecteurs (3) agencés côte à côte et définissant, tous ensemble, la paroi arrière et la paroi inférieure de l'élément de cadre, lesdits réflecteurs étant séparés les uns des autres par des nervures respectives (15) de l'élément de cadre qui relient d'un seul tenant des bords latéraux respectifs des réflecteurs (3) à ladite paroi supérieure (13) de l'élément de cadre ; la paroi supérieure de l'élément de cadre délimitant un écran unique (10) orienté de façon à faire face à tous les réflecteurs (3) avec ladite surface réfléchissante (11) de celui-ci.

8. Dispositif d'éclairage selon l'une des revendications ci-dessus, **caractérisé en ce que** les saillies (14) réparties uniformément sur la surface réfléchissante (11) de l'écran (10) faisant face audit au moins un réflecteur (3) sont choisies dans le groupe constitué des éléments suivants : microprismes, gaufrage, moletage, brochage, hologrammes.

9. Véhicule comprenant un dispositif d'éclairage (1), un projecteur ou un feu, selon l'une des revendications ci-dessus.
